# EUROPEAN PATENT APPLICATION

(11) **EP 1 733 969 A1**
(43) Date of publication of application: **20.12.2006**
(21) Application number: 05425434.7
(22) Date of filing: 17.06.2005
(51) Int. Cl.: B65B 35/50, B65B 25/14

(54) **Method for forming and unloading of orderly groups of products, in particular rolls of paper**

(71) Applicant: KPL Packaging S.p.A., 40012 Calderara di Reno (IT)
(72) Inventor: Cinotti, Andrea, 40141 Bologna (IT)
(74) Representative: Mannucci, Michele

(57) **Abstract**

The formation of a group (2) of paper rolls (3) arranged according to a first number (h) of overlapping layers (4) is obtained by feeding the layers (4) onto an elevator platform (8) by at least two overlapping feeding conveyors (11); the method initially envisaging loading onto the platform (8) a number of layers (4) at the most equal to the feeding conveyors (11), lowering the platform (8) by a step approximating by excess the height of the layers (4) just loaded, and finally loading on the platform (8) and on the layers (4) already loaded a number of layers (4) at the most equal to the number of feeding conveyors (11).

## Description

The present invention relates to a method for forming and unloading of orderly groups of products.

The present invention finds particularly advantageous use in paper roll packing machines, to which the following description will make explicit reference without for this loosing in generality.

In paper roll packing machines, it is known ordering rolls into groups consisting of several overlapping layers, each of which is defined by a plurality of rolls ordered according to a plurality of reciprocally parallel rows.

Each group is formed on an elevator platform movable between a lowered loading position of the layers and a raised unloading position of the group to a packing line of the packing machine.

The layers are loaded onto the platform by a plurality of overlapping feeding conveyors, which are operated at the same time or selectively for forming a group consisting of a number of layers at the most equal to the number of feeding conveyors.

From the above it follows that, in the known packing machines, there always exists the problem of forming groups of rolls consisting of a number of layers higher than the number of feeding conveyors.

It is the object of the present invention to provide a method for forming and unloading of orderly groups of products, in particular rolls of paper, which is free from the aforementioned drawbacks, is simple and cost-effective to implement and allows, therefore, to improve the versatility of the packing machines already working on the market.

According to the present invention it is provided a method for forming and unloading of orderly groups of products, in particular rolls of paper, according to that claimed in the accompanying claims.

The present invention will now be described with reference to the accompanying drawings which show a non-limitative example of embodiment, in which:
figures from 1 to 4 are schematic lateral views, with parts removed for clarity, of a preferred embodiment of the packing machine of the present invention shown in four different operating positions.

With reference to figures from 1 to 4, numeral 1 indicates, as a whole, a packing machine for packing groups 2 of paper rolls 3 each formed by a respective plurality of rolls 3 ordered according to a determined number h of overlapping layers 4 (in the case in point three layers 4) and, in each layer 4, according to several parallel rows placed side by side.

The machine 1 comprises a packaging line 5 of the known type, which is adapted to receive in sequence the groups 2 from a forming and unloading unit 6, and to pack each group 2 inside a respective wrapping sheet (not shown) folded around the group 2 itself.

The unit 6 comprises a device 7 for forming groups 2 comprising, in turn, an essentially horizontal elevator platform 8 movable, under the bias of an actuating device of the known type and not shown, in a vertical direction 9 from and to a raised unloading position (shown by a broken line in the figures from 1 to 4) of the groups 2 to the packing line 5.

The platform 8 receives the layers 4 from a feeding device 10 comprising a determined number k of feeding conveyors 11 (in the case in point two conveyors 11), which are reciprocally overlapping and extend between the platform 8 and a distribution device of the known type and not shown, which is normally common to the conveyors 11, and is adapted to feed in sequence the layers 4 to the conveyors 11 themselves. The conveyors 11 comprise respective resting surface elements 12, in which one (indicated hereinafter by 12a) is arranged underneath the other (indicated hereinafter by 12b) and is essentially horizontal.

The layers 4 are fed along the respective element 12a, 12b via a thrust device 13 comprising a pair of ring conveyors (not shown), which are arranged on opposite sides of the respective element 12a, 12b in a direction 14 perpendicular to the surface of the sheet of the figures from 1 to 4, and are movable in respective vertical planes, and a plurality of feeding elements 15 (only one of which is shown for each device 13), which extend between the ring conveyors in the direction 14, are uniformly distributed along the ring conveyors themselves, and each one of them is adapted to engage a respective layer 4 to feed it towards the platform 8.

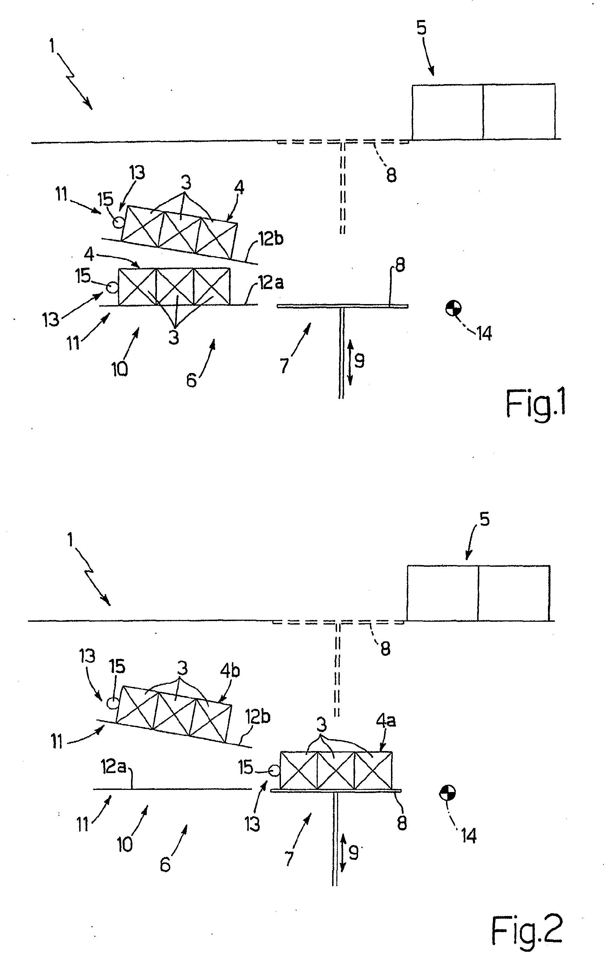

The operation of the machine 1 will now be described with reference to the figures from 1 to 4 and from an instant in which each element 12a, 12b presents a layer 4 (indicated hereinafter by 4a and 4b, respectively) arranged in a transfer position immediately upstream of the platform 8 and in which the platform 8 is essentially coplanar with the element 12a (figure 1).

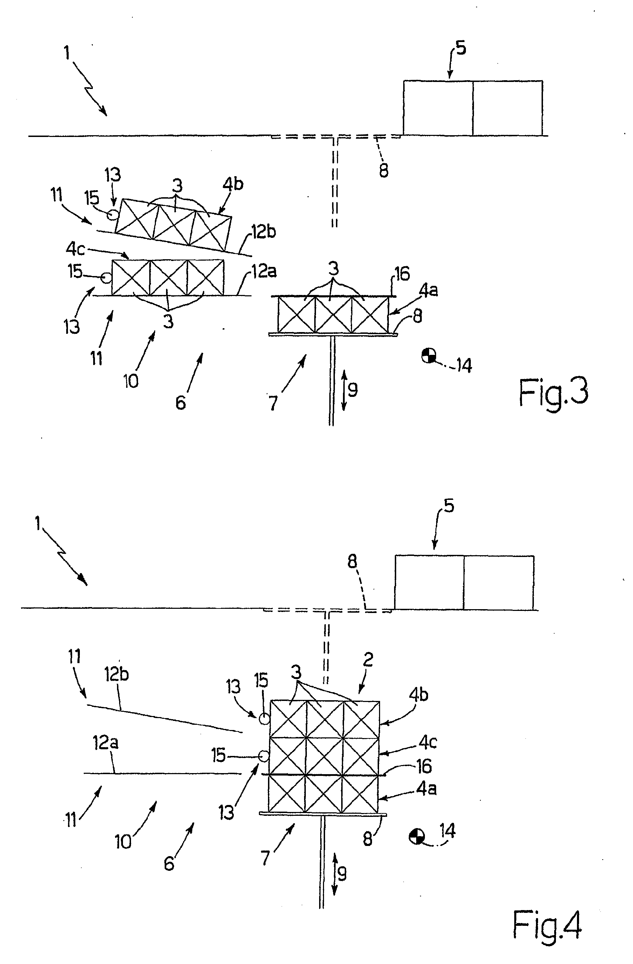

The biasing device 13 associated to the element 12a is operated firstly to load the layer 4a on the platform 8 (figure 2) and to feed, therefore, a new layer 4 (indicated hereinafter by 4c) to the transfer position (figure 3), and the platform 8 is lowered by a step approximating by excess the height of the layer 4a measured parallel to the direction 9 (figure 3).

At this point, an essentially flat protective element 16 is moved on the layer 4a to guarantee stability of the layer 4a itself and the devices 13 are operated to shift the layers 4b and 4c over the layer 4a (figure 4) and onto the element 16.

Finally, the element 16 is disengaged from the layer 4a and the platform 8 is shifted into the raised unloading position of the group 2 to the packing line 5.

Obviously:
the formation of each group 2 can be put into effect by loading onto the platform 8 firstly the layers 4a and 4b and, then, the layer 4c; and
the forming device 7 is capable of making groups 2 of rolls 3 consisting of four layers 4 loading onto the platform 8 firstly the layers 4a, 4b and, then, the layer 4c and a further layer 4.

From the above it follows that the forming device 7 presents a relatively high versatility and allows the formation of groups 2 of rolls 3 consisting of a number of layers 4 higher than the number of conveyors 11.

## Claims

1. A method for forming and unloading orderly groups (2) of products (3), in particular paper rolls (3), in a packing machine for products (3), each group (2) comprising products (3) ordered according to a first number (h) of overlapping layers (4) and the packing machine comprising a elevator platform (8) movable in an essentially vertical direction (9) from and to a raised unloading position of the groups (2) of products (3) and a feeding device (6) comprising, in turn, a second number (k) of overlapping conveyors each adapted to feed to the platform (8) a respective layer (4) of products (3), the second number (k) being equal to at least two and lower than the first number (h), and the method comprising the step of:
initially loading onto the platform (8) a third number of layers (4) at the most equal to said second number (k);
and being **characterised in that** it comprises, moreover, the steps of:
lowering the platform (8) by a step approximating by excess the height of the layers (4) of said third number of layers (4); and
loading, finally, on the layers (4) of said third number of layers (4) a forth number of layers (4) at the most equal to said second number (k); said first number (h) of layers (4) being equal to the sum of said third and fourth number of layers (4).

2. A method according to claim 1 and further comprising the step of:
arranging on said third number of layers (4) a protective element (16) for guaranteeing the stability of the third number of layers (4) during the loading of said fourth number of layers (4) onto the platform (8).

3. A method according to claim 2 and further comprising the step of:
disengaging the protective element (16) from the group (2) of products (3) after completing the formation of the group (2) itself.

4. A method according to claim 3 and further comprising the step of:
shifting the platform (8) to the raised unloading position of the group (2) of products (3) after disengaging the protective element (16) from the group (2) itself.
